# EUROPEAN PATENT APPLICATION

(11) **EP 0 704 821 A2**
(43) Date of publication of application: **03.04.1996**
(21) Application number: 95115313.9
(22) Date of filing: 28.09.1995
(51) Int. Cl.: G06T 7/00, G01N 21/88

(54) **Image processing method and device employing same**

(30) Priority: 28.09.1994 JP 259565/94
(71) Applicant: OMRON CORPORATION, Kyoto-shi, Kyoto-fu 617 (JP)
(72) Inventor: Kawachi, Masahiro, Yawata-city, Kyoto-fu (JP)
(74) Representative: Kahler, Kurt, Dipl.-Ing.

(57) **Abstract**

An image processing method and device by which objects (6) supplied successively on a conveyor belt (1) or other means of conveyance are imaged individually and image processing is performed on the images so obtained. Image processing is performed, for example, to compare markings on an object image with a model image to identify variations between the two images. If variations are detected, the model image in memory can be modified or replaced with the input object image without shutting down an entire production line in order to create an entirely new model image. In this way the recorded model data can be updated without interrupting the flow on the belt (1), and appropriate correction data can be recorded efficiently.

## Description

### Field Of The Invention

This invention relates to an image processing method. More particularly, this invention relates to an image processing method by which objects supplied one after another on a conveyor belt or other means of conveyance are imaged, individually, and specified image processing is performed on the images so obtained. This invention also relates to an image processing device in which this method is employed.

### Background Of The Invention

In recent years, factory production lines have come to rely on product inspection methods whereby products are imaged as they are transported on a conveyor belt. In accordance with these methods, a television camera in a given location captures an image for each item, such as production date and production serial number. The image data obtained in this way is input into an image processing device.

Prior to imaging products, the image processing device establishes a region to be inspected by using an image (hereafter to be known as a "model image") obtained by imaging a product of acceptable quality. The model image is obtained by placing a sample of an acceptable product in the inspection position and imaging the sample.

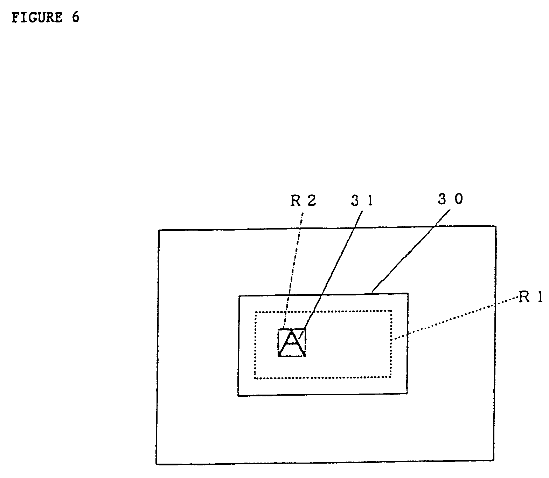

FIG. 6 shows an example of how the inspection region is established. Here two inspection regions are established: R₁ 30, a region of a given size in the model image, and R₂ 31, a region within R₁ containing the letter "A" which is contained in the model image.

Once the inspection regions have been established, a feature analysis is performed for the image data, within each of the inspection regions, in order to create a reference for comparison. During the feature analysis, the parameters for establishing regions R₁ and R₂ (such as the location and the dimensions of the region) and the image data for the entire model image are stored in the memory of the image processing device to be used later in the inspection.

Once the feature analysis has been performed, the object image for each object to be inspected is successively input into the image processing device and compared with the model image. If the input object image is misregistered with respect to the model image, this is detected and the misregister is corrected. The inspection region is then established in the corrected object image based on the aforesaid parameters.

The image processing device then performs a feature analysis for the object image within the region which was established and compares this feature analysis with that which it has stored. From the result of this comparison, it determines whether the product is of acceptable quality. The result of this determination is displayed on a monitor or the like, and defective products are removed from the conveyor belt by hand or mechanically.

Certain shortcomings in the above-described systems have been noted. With the inspection systems described above, it sometimes happens that a product which has been judged by an inspector to be acceptable is determined by the inspection device to be defective due to minute variations among the products.

For example, in the case of the printed letter "A" discussed above, variations in the quantity of ink used in the printing process may cause the density of the printed letter to vary slightly. These variations result in a noticeable discrepancy between the feature analysis obtained in region R₂ during inspection and the stored feature analysis. Since such a discrepancy nay cause a large number of products to be judged defective, the inspector will have to shut down the line temporarily in order to rerecord the feature analysis using a new sample.

When this method is used, and the feature analysis must be rerecorded, the line must be shut down and a new sample placed in the inspection position. In order to rerecord all data using a new sample, not only the feature analysis but the parameters for establishing inspection regions must be input a second time, an extremely inefficient process. The rate of production thereby decreases and, if new data must be recorded frequently, significant losses will result.

There are also problems in the method used to establish inspection regions. It sometimes happens that the parameters for establishing the inspection regions must be revised in the middle of an inspection. In this case, the inspector, relying on intuition, inputs data to revise the parameters which are then rerecorded.

When intuition is used to rerecord only the parameters to establish the inspection region, the inspector will have to rely on trial and error to revise those parameters. The burden on the inspector increases, and the accuracy of the revised region diminishes.

### Summary Of The Invention

The present invention alleviates to a great extent the problems of the prior art by providing an image processing method by which a series of objects are imaged, one after another, an inspection region is established in each object image, and image processing is performed on the object image within the inspection region.

In one aspect of the invention, an object image obtained at a time selected by the user is frozen on the screen without interrupting the imaging operation. An image representing the inspection region is superimposed on the same screen. From the screen which is displayed, it is determined whether the parameters used to establish the inspection region were appropriate. These parameters may be modified depending on the result of the determination. A new image is obtained and a new inspection region is established for the subsequent object images according to the new parameters, and further image processing is performed.

In the above aspect of the invention, the user selects a point during the image processing, after the inspection region has been established, where the object image input at this moment will be displayed. An image representing the inspection region is then superimposed on the object image. These steps are performed without interrupting the imaging operation. A determination is then made as to the appropriateness of the parameters used to establish the region. The inspector will view this display and if it is determined that the region which was established is not the appropriate one, the parameters which establish the correct region may be modified. In subsequent image processing, the inspection region is established using these modified parameters.

In another aspect of the present invention an image processing method is provided by which a series of objects are imaged, one after another. The object image data representing each object image is then compared with recorded data representing a model image, and image processing is performed.

In this aspect of the invention, object image data obtained at a time chosen by the user is frozen without interrupting the imaging operation. The object image data in this frozen image are then compared with recorded data representing the model image. In response to this comparison, the frozen image may be used as a model image to modify the recorded data, not abandoned after the comparison. Object images obtained thereafter are compared with the new recorded data, and the images are processed.

In the above aspect of the invention, the inspector selects a point in time during the course of processing an object image to compare it with a model image. The object image which is input at this moment is frozen without interrupting the imaging process. The frozen image is recorded as the new model image, and image processing resumes.

In another aspect of the present invention an image processing device is provided having a unit which detects a misregister of an object image with a model image, and which realigns the object image so as to correct the misregister.

In the above aspect of the invention, after any misregister of the input object image with respect to the model image has been corrected, the correctly oriented image is frozen in response to a command to modify the parameters which establish the inspection region. An image representing the inspection region is then superimposed on the object image. The inspector then views an output display and inputs the data necessary to modify the parameters. The parameters for defining the inspection region are then written over based on the modified object image data which are input.

One object of this invention is to allow the inspector, when it becomes necessary to rerecord the parameters to establish an inspection region or the feature analysis within a region, to revise the parameters or feature analysis using an object image which is obtained at that moment without interrupting the imaging operation. In this way the recorded data can be updated without interrupting the flow on the belt, and appropriate correction data can be recorded efficiently.

### Brief Description Of The Drawings

FIG. 1 is a perspective view depicting an inspection line on which an image processing method in accordance with a preferred embodiment of this invention has been implemented.

FIG. 2 is a block diagram illustration of the electrical system of the inspection device of FIG. 1.

FIG. 3 depicts the screen displayed on the monitor of the inspection device of FIG. 1, when the recorded data is being established.

FIG. 4 is a flowchart depicting the order of operations executed by the image processing device of FIG. 1.

FIG. 5 depicts the screens displayed on the monitor of the image processing device of FIG. 1, when the object image is input and when the recorded data is revised.

FIG. 6 depicts an example of the inspection regions in a the model image.

### Detailed Description Of Preferred Embodiments of the Invention

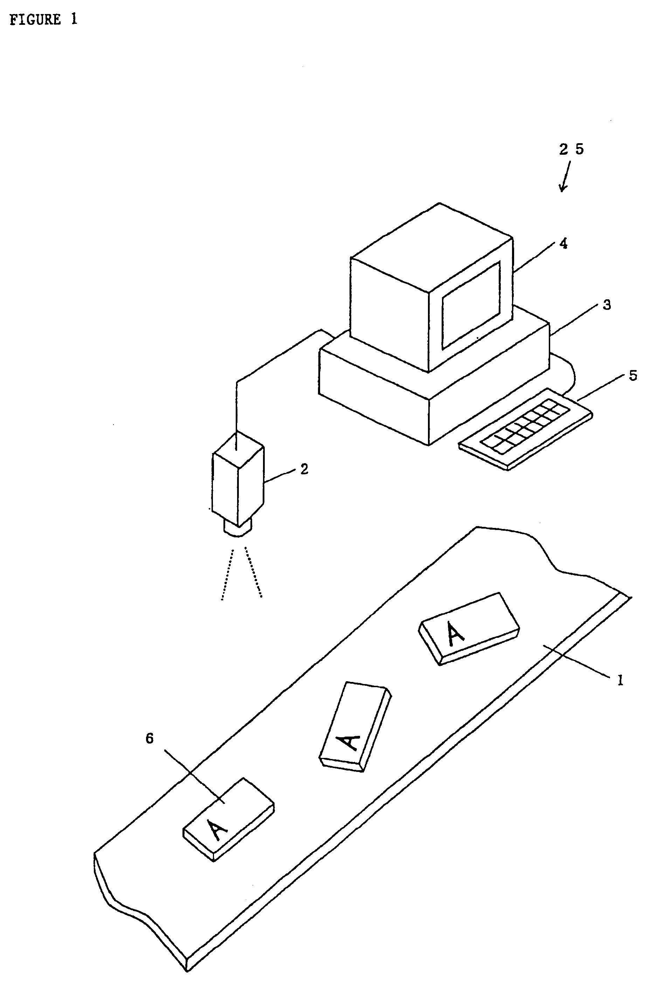

Referring now to the figures wherein like reference numerals indicate like elements, in FIG. 1 there is shown an inspection line on which the image processing method of a preferred embodiment of this invention has been implemented. The objects on the conveyor belt 1 are inspected by the inspection device 25, which includes a camera 2, an image processing device 3, a monitor 4 and an operating unit 5.

The conveyor belt 1 transports objects 6 that have, printed on the surface, a letter or the like, such as production date or serial number. The objects 6 are loaded onto the belt in desired locations and orientation in an earlier process, and they are conveyed, one by one, to the inspection site. An illumination device (not shown) illuminates the objects which are then imaged by the camera 2.

The inspection device 25 is equipped with a sensor (not pictured), whose signal is input to the image processing device 3 when an object arrives at the inspection site. When the image processing device 3 receives this signal, it captures the object image from the camera 2 and detects any misregister of the input object image with respect to the previously recorded model image. After correcting the misregister, the image processing device 3 establishes the inspection region in the correctly oriented image and processes the image data within this region. The monitor 4 displays, as needed, a composite image (discussed below), the inspection result, or other necessary data.

The operating unit 5 consists of a keyboard or other input device. An inspector uses this input device to input to the image processing device 3 the various commands related to the inspection, a freezing command to freeze the image (discussed below), and the data needed to modify the stored data.

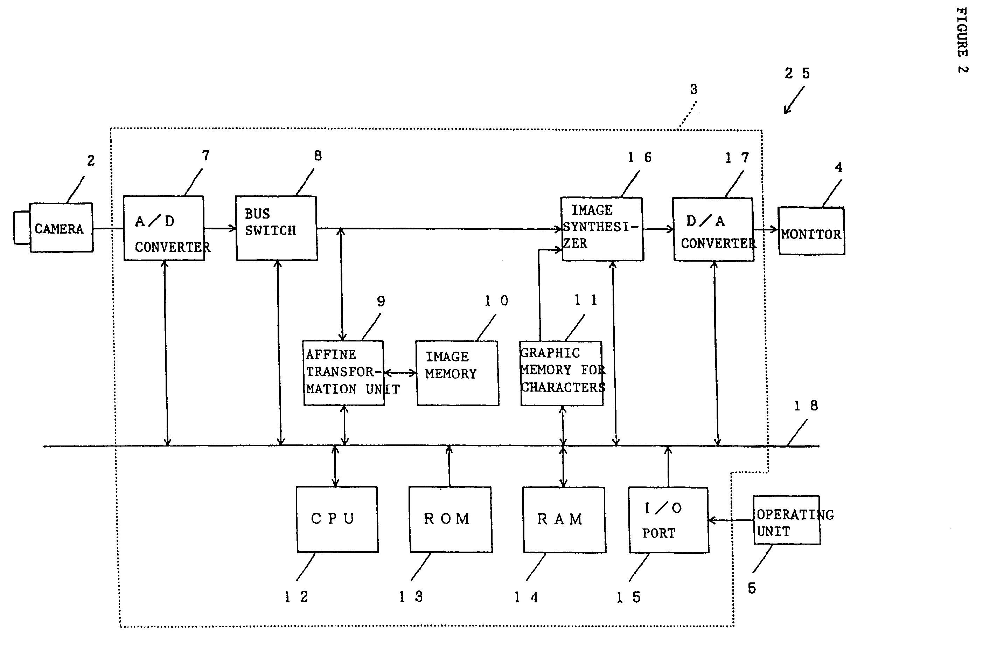

Referring now to FIG. 2 there is illustrated a block diagram of the electrical system of the inspection device 25. The image processing device 3 includes an A/D converter 7, a bus switch 8, an affine transformation unit 9, an image memory 10, a graphic memory 11 for characters, a CPU 12, a ROM 13, a RAM 14, an I/O port 15, an image synthesizer 16, and a D/A converter 17.

The analog image signal from the camera 2 is converted to digital image data by the A/D converter 7. The digital image data is then output via bus switch 8 to the image synthesizer 16 and the affine transformation unit 9.

The affine transformation unit 9 serves to correct any misregister of the input object image. When the degree of misregister and the angle of rotation of the input object image with respect to the model image have been established, the processing required to perform an affine transformation is executed. This affine transformation uses the values established in order to change the position of every pixel in the input object image. The data representing the transformed image (hereafter, the "corrected image") are output to the CPU bus 18 and the image synthesizer 16.

If the degree of misregister and angle of rotation have not yet been established, when the image from the A/D converter 7 is input into the affine transformation unit 9, the image data which have been input are output in their unmodified form to image memory 10.

The graphic memory 11 stores the image of the inspection site and the data needed for displays on the inspector's screen. The display data are transmitted to the image synthesizer 16.

The image synthesizer 16 synthesizes the display data in graphic memory 11 using the object image from the A/D converter 7 and the corrected image from the affine transformation unit 9 and outputs this data to the D/A converter 17. The D/A converter 17 converts the synthesized image to analog signals which it outputs to monitor 4. The data that will be output to image synthesizer 16 is determined by the operation of the bus switch unit 8.

The CPU 12 controls the operation of each of the aforementioned components based on a program stored in the ROM 13. The RAM 14, which is used as a work area to store various data, reads appropriate data out of, or writes them into, the CPU 12.

The operating unit 5 is connected to the CPU bus 18 by way of the I/O port 15. When the inspector inputs information through the operating unit, the input signals are transmitted to the CPU 12, where they are interpreted.

Prior to the inspection, the image processing device 3 establishes the inspection region in a model image obtained by imaging a sample of an acceptable product. The parameters which establish this region and the feature analysis for the model image within this region are designated as recorded data for the purpose of the inspection.

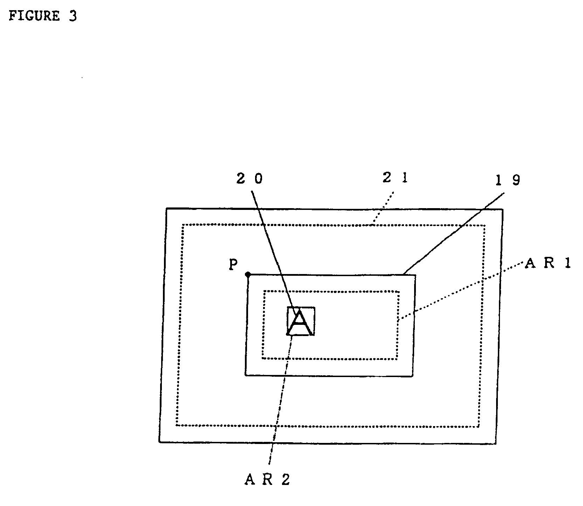

FIG. 3 depicts the display on the screen of the monitor 4 when the data regarding the model image is being established Superimposed images of inspection regions AR₁ and AR₂, which have been established by the inspector in the model image, are displayed.

A large area of model image 19 is designated as region AR₁. This area is inspected to determine whether there are ink smears or dirt on the surface of the object. Feature analysis will be extracted from the image in region AR₁ for such values as average density.

Since region AR₂ is established to inspect the quality of the printing used to produce the image 20 (the letter "A"), the region is designated so as to encompass the entirety of the image 20. From the image in region AR₂ feature analysis is extracted for the center of gravity of the letter "A" and the length of the periphery surrounding the "A".

When the inspector has verified the parameters which establish the inspection regions, by viewing the display screen, and has executed the operation to finalize the recording, the parameters which establish inspection regions AR₁ and AR₂ (their location, their dimensions, and so forth) and the feature analysis extracted from each of the regions are stored in RAM 14 as data representing the model image and as data recorded for the inspection.

The data representing the upper left corner P of the model image 19 will be used to detect any misregister of the object image. The area 21 indicates the range within which a misregistered object image can be corrected during inspection. As long as the image of the object is within this range, the processing to correct the object image can be executed properly.

If a product which the inspector deems acceptable is judged defective in the inspection, the inspector uses the operating unit 5 to input a freeze command. Transmission of the object image to image processing device 3 is halted without shutting down the conveyor belt 1. The object image which is input at the moment the freeze command is given and its corrected image are frozen and held in the image memory 10 and the RAM 14 to be used to revise the recorded data.

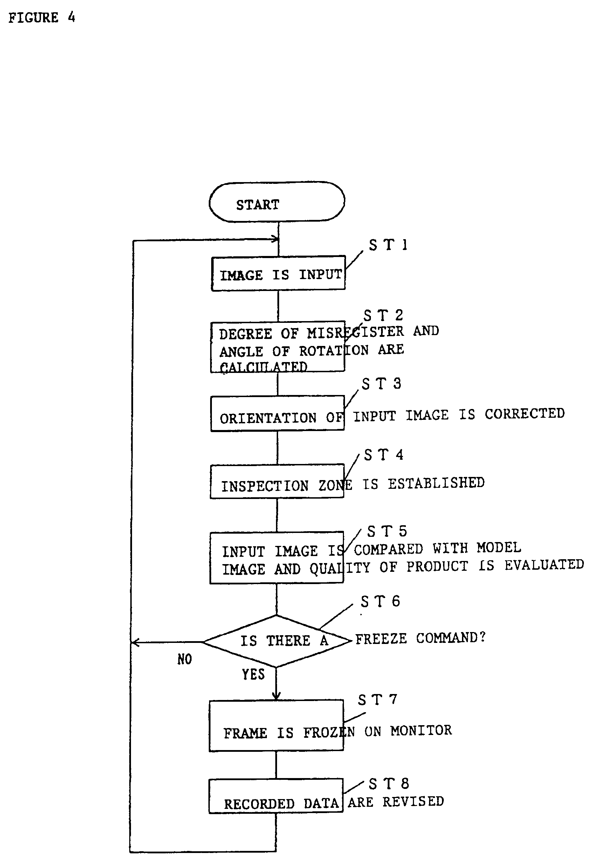

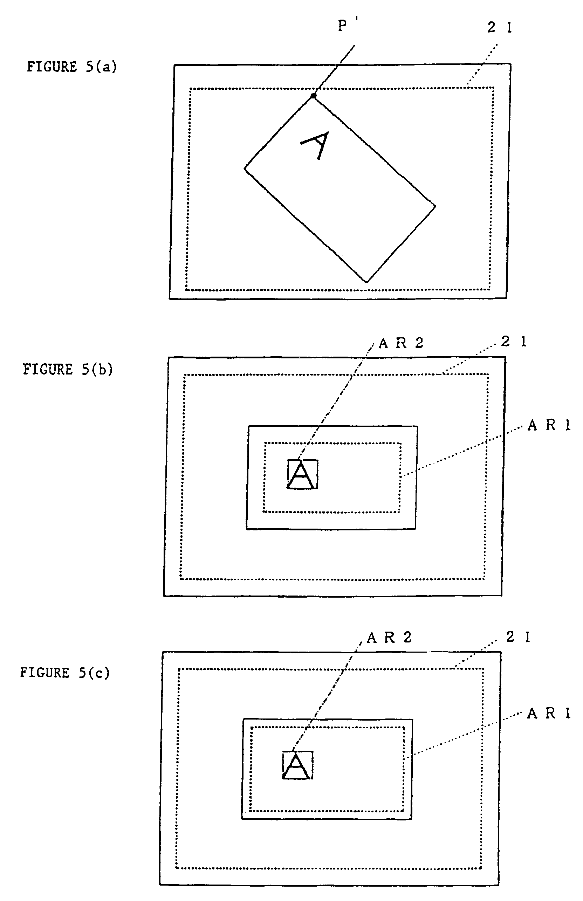

In FIG. 4 there is shown, as steps ST1 through ST8, the order of operations executed during an inspection by the image processing device of FIG. 1. FIGS. 5 (1) through (3) depict the image displayed on monitor 4 during image processing. The operation of image processing device 3 with reference to the steps of FIG. 6 and the illustrations in FIG. 5 will now be explained.

The image of the object captured by the camera 2 is captured by the image processing device 3. Data representing this image, which has been digitised by A/D converter 7, is stored in image memory 10 ST1.

FIG. 5 (1) shows an example of an object image displayed on monitor 4. This image, whose misregister has not yet been corrected is displayed together with the area 21 which represents the range within which a misregister can be corrected.

The CPU 12 reads the image out of the image memory 10. It extracts the position of the corner point P' (FIG. 5), which corresponds to corner point P in the model image. The data representing the position of point P' are compared with the data representing the position of point P. From this comparison, the degree of misregister in axial directions X and Y including the angle of rotation are calculated ST2.

The degree of misregister, including the angle of rotation, which have been calculated are transmitted to the affine transformation unit 9. Based on these values, an affine transformation is executed for every pixel location in the image memory 10, and the orientation of the image is corrected ST3. Using the Parameters to establish the inspection region, the CPU 12 establishes regions AR₁ and AR₂ in the correctly oriented image and extracts feature analysis from each region. These feature analysis are compared with the previously recorded feature analysis, and the quality of the printing is determined from the result of this comparison ST4, ST5.

If print quality which the inspector deems acceptable is judged by the inspection device 25 to be defective, the inspector uses the operating unit 5 to input a freeze command. This command causes the camera 2 to suspend its imaging. The image input at the moment the command was given and its corrected image are frozen and held in the memory. The CPU 12 then displays on monitor 4 a synthesized image containing both the model image and the object image displaying inspection regions AR₁ and AR₂ ST6, ST7.

In another preferred embodiment for the operation of the inspection device 25, after inputting the freeze command mentioned above, the freeze command does not cause the camera 2 to suspend its imaging while the image input at the moment the command was given is stored in a memory area. Thus, steps ST1 through ST6 are continued in parallel and concurrently with steps ST7 and ST8.

FIG. 5 (2) shows an example of a synthesized image displayed on monitor 5. In this figure, the image whose orientation has been corrected is displayed on top of the model image of the object so the inspector can determine whether the process of correcting the orientation in step ST3 was executed properly.

After the inspector has verified, from the synthesized image on monitor 4, that the object image is now correctly oriented, in step ST8 the operating unit 5 is used to specify the data needed to make the correction and inputs this data.

For example, if the inspector wishes to modify the parameters which establish region AR₁, the parameters to be modified are input via operating unit 5. In response, inspection region AR₁ is displayed in the synthesized image shown on monitor 4, and the region is redrawn according to the new parameters, as pictured in FIG. 5 (3). The inspector views the display screen to verify that the region has been modified in an appropriate fashion, and finalizes the correction operation.

When the feature analysis must be rerecorded for either of the inspection regions, the inspector views the synthesized image which is displayed to verify that the object image has been reoriented properly. The operating unit 5 is then used to input a command directing that the recorded data be revised to change the feature analysis in the inspection region. In this way the new feature analysis for the inspection region of the correctly oriented image is stored in the RAM 14 as necessary data. In this case it would also be possible to direct that the data representing the entire model image be replaced by the data representing the corrected object image.

Once the recording of the corrections has been completed, the inspector indicates via the operating unit 5 that the inspection should resume. The camera 2 resumes imaging the objects, and the steps ST1 through ST6 are executed sequentially on subsequent object images using the newly recorded data.

When the steps ST1 through ST6 are executed in parallel with steps ST7 and ST8, revised data representing the correct model image corrected in step ST8 will be used in the following sequence of steps ST1 through ST6 as a model image.

In the embodiment discussed above, the freeze command is given when the result of the inspection is obtained. However, the invention is not limited to this form only. It is anticipated that the freeze command may be given and the necessary data may be rerecorded at any desired point during the process of inspection. If the image of the object in the object image does not lie within area 21, the region in which a misregister can be corrected, the inspector must cancel the rerecording of data, capture a new object image, and again issue a freeze command, whereupon rerecording commences again.

While the processing is being executed to rerecord the necessary data, conveyor belt 1 continues to transport the products as usual. This will result in a number of products getting past the inspection site, however, since the inspector is able to make the appropriate correction while viewing a frozen frame, the previous set of recorded data can still be maintained and used to inspect the products coming down the line at this time. This method is far more efficient than previous methods, in which the entire line was shut down while the data were rerecorded, and it allows the data to be revised in an appropriate fashion.

In the first embodiment described above to modify the inspection region, an object image and an image representing the inspection region are superimposed on the screen at a selected point in the image processing executed after the inspection region has been established. This is done without interrupting the imaging operation. The inspector revises the parameters to establish the inspection region while viewing the screen. This enables ease in determining whether the parameters are appropriate and, if they are not, to revise them swiftly.

In the second embodiment described above wherein the frozen object image is used to modify the recorded data as a model image, the object image is frozen at a selected point in image processing and used as a model image. This is done without interrupting the imaging operation. The recorded data is revised to reflect the fact that the frozen image is now taken as the new model image. This allows the rerecording process to be executed efficiently without requiring that the supply of products be interrupted so that a new model can be imaged.

In the third embodiment described above, to correct a misregister of the object image with respect to the model image the correctly oriented image is frozen in response to a command to revise the parameters to establish the inspection region, and displayed on the screen with an image representing the inspection region superimposed the object image. The inspector then inputs the data needed to revise the parameters. Viewing the displayed image, the inspector is able to judge correctly whether the inspection region is appropriate based on the parameters recorded previously, and if it is not, the parameters can be revised in an appropriate fashion.

The above description and drawings are only illustrative of preferred embodiments which achieve the objects, features and advantages of the present invention, and it is not intended that the present invention be limited thereto. Any modification of the present invention which comes within the spirit and scope of the following claims is considered part of the present invention.

## Claims

1. An image processing method for an image inspection system in which objects to be inspected are successively imaged and in which an inspection region on a model image can be modified, comprising the steps of:
(a) imaging an inspection object to obtain an object image;
(b) establishing an inspection region on said object image defined by at least one parameter of a model inspection region;
(c) freezing said object image on a display unit, without interrupting said imaging operation, when it is desired to modify said parameter of said model inspection region;
(d) superimposing said model inspection region on said frozen object image on said display unit to generate a superimposed image;
(e) determining if said parameter of said model inspection region on said superimposed image be needs to be modified;
(f) modifying said parameter of said model inspection region, when needed, to generate a new parameter; and
(g) repeating step (a) through step (f) based on said new parameter of said model inspection region.

2. An image processing method for an image inspection system in which objects to be inspected are successively imaged and in which a model image can be replaced, comprising the steps of:
(a) imaging an inspection object to obtain an object image;
(b) comparing said object image with a model image;
(c) freezing said object image on a display unit, without interrupting said imaging operation, when it is desired to replace said model image;
(d) modifying said model image, when it is desired to replace said model image, based on said frozen object image to generate a new model image; and
(e) repeating step (a) through step (b) based on said new model image.

3. The image processing method according to claim 2, wherein said step (a) through step (c) are executed in parallel with step (d).

4. An image processing device for image inspection system in which a model inspection region on a model image can be modified, comprising:
an image memory unit to store a parameter to establish a model inspection region;
an interface unit which receives object image data representing an object image to be inspected;
an image processing unit which performs image processing in an inspection region of said object image defined by said parameter of said model inspection region;
an indication unit to indicate to modify said parameter of said model inspection region without interrupting an imaging operation;
a display control unit to display and freeze said object image and to superimpose said model inspection region on said object image;
a modification unit to modify said parameter of said model inspection region stored in said image memory based on a modification data; and
an input unit to input said modification data for said modification unit.

5. The image processing device according to claim 4, wherein said image processing unit judges a quality of said object image within said inspection region.

6. The image processing device according to claim 4, wherein said indication unit is activated when a quality of said object image is judged as insufficient by said image processing unit.

7. An image processing device for an image inspection system in which a model image can be modified, comprising:
an image memory unit to store image data of a model image;
an interface unit which receives object image data representing an object image to be inspected;
an image processing unit which compares said object image with said model image, and performs image processing;
an indication unit to indicate to modify said model image without interrupting an imaging operation;
a display control unit to display and freeze said object image; and
a modification unit to modify said model image stored in said image memory based on said frozen object image.

8. The image processing device according to claim 7, wherein said image processing unit determines the quality of said object image compared with said model image in said image memory.

9. An image processing device according to claim 7, wherein said indication unit is activated when a quality of said object image is determined to be insufficient by said image processing unit.

10. An image processing device for an image inspection system in which a misregister of an object image can be detected, and a model inspection region on a model image can be modified, comprising:
an image memory unit to store at least one parameter to establish a model inspection region of a model image;
an interface unit which receives object image data representing an object image to be inspected;
a misregister correction unit which detects a misregister of said object image received by said interface unit with respect to said model image, and revises said object image so as to correct said misregister;
an image processing unit which performs image processing in an inspection region of said revised object image defined by said parameter of said model inspection region;
an indication unit to indicate to modify said parameter of said model inspection region without interrupting an imaging operation;
a display control unit to display and freeze said revised object image and superimpose said model inspection region on said revised object image;
a modification unit to modify said parameter of said model inspection region stored in said image memory based on a modification data; and
an input unit to input said modification data for said modification unit.

11. An image processing device for an image inspection system in which a model image can be modified, comprising:
an image memory unit to store image data of a model image;
an interface unit which receives object image data representing an object image to be inspected;
a misregister correction unit which detects a misregister of said object image received by said interface unit with respect to said model image, and revises said object image so as to correct said misregister;
an image processing unit which compares said revised object image with said model image, and performs image processing;
an indication unit to indicate to modify said model image without interrupting an imaging operation;
a display control unit to display and freeze said revised object image; and
a modification unit to modify said model image stored in said image memory based on said frozen revised object image.
